# EUROPEAN PATENT APPLICATION

(11) **EP 4 759 945 A1**
(43) Date of publication of application: **17.06.2026**
(21) Application number: 25221743.5
(22) Date of filing: 09.12.2025
(51) Int. Cl.: C22B 1/00, C22B 7/00, C22B 3/00, H01M 10/54

(54) **METHOD FOR REPRODUCING POSITIVE ELECTRODE MATERIAL**

(30) Priority: 11.12.2024 JP 2024216384
(71) Applicant: Prime Planet Energy & Solutions, Inc., Chuo-ku, Tokyo 103-0022 (JP); The University of Tokyo, Bunkyo-ku, Tokyo 113-8654 (JP)
(72) Inventor: SUZUKI, Shinya, Tokyo 103-0022 (JP); OUCHI, Takanari, Tokyo 113-8654 (JP)
(74) Representative: Kuhnen & Wacker Patent- und Rechtsanwaltsbüro PartG mbB

(57) **Abstract**

The present invention provides a novel method capable of recovering Ni and Co from a battery waste containing Ni and Co while adjusting an Ni/Co ratio. The method for reproducing the positive electrode material according to the present disclosure includes a step of leaching Ni and Co, using an ammonia aqueous solution containing ammonia and ammonium sulfate, from a battery waste containing Ni and Co into the ammonia aqueous solution. Herein, oxygen is fed to the ammonia aqueous solution in the leaching.

## Description

### BACKGROUND OF THE DISCLOSURE

### 1. Field

The present disclosure relates to a method for reproducing a positive electrode material.

### 2. Background

Lithium ion secondary batteries are widely used in various fields such as power sources for vehicle drive, or portable power sources. In recent years, the material recycling of used lithium ion secondary batteries has been promoted from the viewpoint of SDGs. In lithium ion secondary batteries, various metal elements are used. For the material recycling, technologies for separating metal elements contained in used lithium ion secondary batteries have been developed.

Representative examples of positive electrode active materials for lithium ion secondary batteries that have been practically used for automotive applications include lithium-nickel-cobalt-manganese composite oxides (NCM) and lithium-nickel-cobalt-aluminum composite oxides (NCA), both of which contain Ni and Co. Thus, waste of lithium ion secondary batteries using these positive electrode active materials contains Ni and Co. In Non-Patent Literature 1, a leaching solution containing ammonia and ammonium sulfate, and sodium sulfite as a reducing agent are used to selectively separate Ni and Co from among Ni, Co, Mn, and Al contained in positive electrode waste of used lithium ion secondary batteries.

### Citation List

Non-Patent Literature 1: Waste Management, February 2017, vol. 60, p. 680-688

### SUMMARY

In the prior art described above, since Ni and Co are separated together, it is advantageous to reuse Ni and Co for producing a positive electrode active material without separating Ni and Co, from the viewpoint of the production efficiency. On the other hand, as lithium-nickel-cobalt-manganese composite oxides that have been conventionally used, oxides containing equal moles of Ni, Co, and Mn (e.g. LiNi_{1/3}Co_{1/3}Mn_{1/3}O₂) are used in many cases. That is, a Ni/Co molar ratio (hereinafter, simply referred to as "Ni/Co ratio") is 1. However, from the viewpoint of achieving a high battery capacity, lithium-nickel-cobalt-manganese composite oxides having a higher nickel content composition (e.g. LiNi_{0.6}Co_{0.2}Mn_{0.2}O₂ with a Ni/Co ratio of 3, LiNi_{0.8}Co_{0.1}Mn_{0.1}O₂ with a Ni/Co ratio of 8) have been developed in recent years. Also, lithium-nickel-cobalt-aluminum composite oxides have a high nickel content (e.g. an Ni/Co ratio in LiNi_{0.8}Co_{0.15}Al_{0.05}O₂ is 5.3).

Thus, there is a problem that an Ni/Co ratio in a recovered lithium ion secondary battery tends to differ from an Ni/Co ratio in a positive electrode active material to be reproduced (particularly, an Ni/Co ratio in a positive electrode active material to be reproduced tends to be higher). Consequently, any method that makes it possible to recover Ni and Co from battery waste containing Ni and Co while adjusting an Ni/Co ratio particularly so as to increase the Ni/Co ratio, is useful.

Thus, an object of the present disclosure is to provide a novel method that makes it possible to recover Ni and Co from battery waste containing Ni and Co while adjusting an Ni/Co ratio.

The method for reproducing a positive electrode material according to the present disclosure includes a step of leaching Ni and Co into an ammonia aqueous solution containing ammonia and ammonium sulfate from battery waste containing Ni and Co. In this step, oxygen is fed to the ammonia aqueous solution in the leaching.

According to this configuration, Ni and Co can be recovered from battery waste containing Ni and Co while adjusting an Ni/Co ratio.

### BRIEF DESCRIPTION OF THE DRAWINGS

FIG. 1 is a flowchart of each step of a method for reproducing a positive electrode material according to the present disclosure;
FIG. 2 is a schematic longitudinal sectional view showing an internal structure of a lithium ion secondary battery as an example;
FIG. 3 is a schematic exploded view showing a configuration of an electrode body of the lithium ion secondary battery illustrated in FIG. 2; and
FIG. 4 is a schematic sectional view of a positive electrode of the lithium ion secondary battery illustrated in FIG. 2.

### DETAILED DESCRIPTION OF THE EMBODIMENTS

The embodiments of the present disclosure will be explained below with reference to the drawings. It should be noted that matters not mentioned herein but necessary for performing the present disclosure may be understood as design matters by those skilled in the art based on the prior art in the field. The present disclosure may be performed based on the content disclosed herein and the common technical knowledge in the field. Furthermore, in the following drawings, the same members and parts that exhibit the same functions are marked with the same symbols for explanation. In each drawing, the dimensional relationships (length, width, thickness, etc.) do not necessarily reflect the actual dimensional relationships. It should be noted that a numerical range expressed as "A to B" herein includes both A and B.

It should be noted that a "secondary battery" herein refers to a power storage device capable of being repeatedly charged and discharged. A "lithium ion secondary battery" herein refers to a secondary battery that uses lithium ions as charge carriers and performs charge and discharge by movement of charges accompanying lithium ions between positive and negative electrodes.

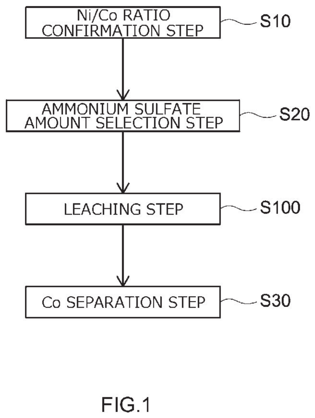

FIG. 1 is a flowchart of each step of a method for reproducing a positive electrode material according to the present disclosure. The method for reproducing a positive electrode material according to the present disclosure includes, as an essential step, step S100 of leaching Ni and Co, using an ammonia aqueous solution containing ammonia and ammonium sulfate, from a battery waste containing Ni and Co into ammonia aqueous solution (hereinafter, also referred to as "leaching step"). In leaching step S100, oxygen is fed to the ammonia aqueous solution in the leaching. The method for reproducing the positive electrode material according to the present disclosure may further include, as optional steps, step S10 of confirming a molar ratio of Ni to Co in the battery waste before leaching step S100 (hereinafter, also referred to as "Ni/Co ratio confirmation step"), and step S20 of selecting an amount of ammonium sulfate depending on a desired molar ratio of Ni to Co (hereinafter, also referred to as "ammonium sulfate amount selection step"). Here, in leaching step S100, a Co compound precipitates. The method for reproducing a positive electrode material according to the present disclosure may further include, as an optional step, step S30 of dissolving, in water, the Co compound precipitated in leaching step S100 to separate the Co compound from a solid residue (hereinafter, also referred to as "Co separation step").

### <Lithium Ion Secondary Battery>

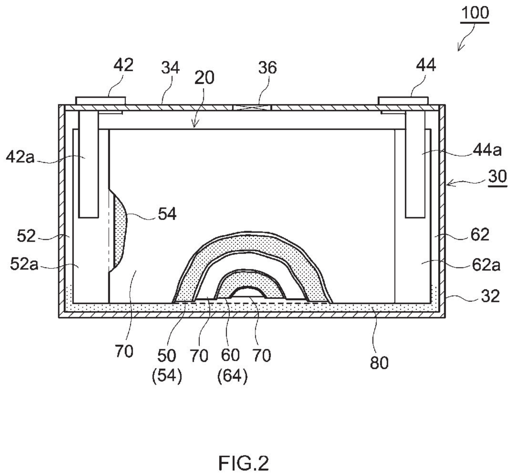

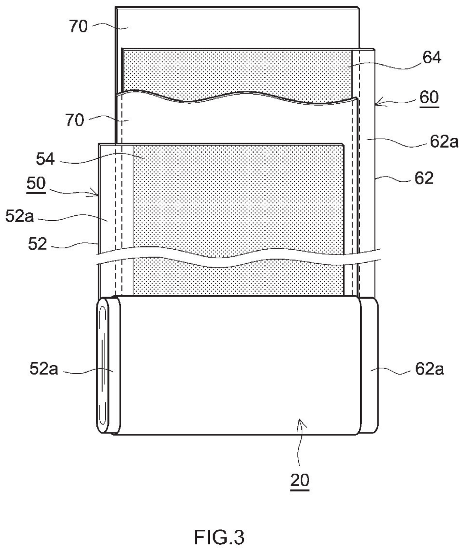

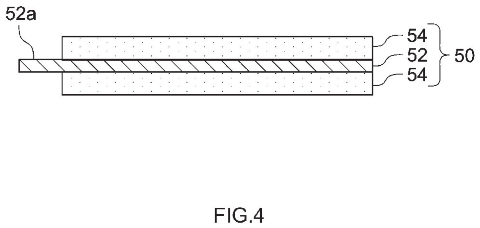

The method for reproducing a positive electrode material according to the present disclosure relates to the material recycling of secondary batteries (particularly lithium ion secondary batteries). First, a general configuration example of a lithium ion secondary battery will be explained. Examples of the structure of the lithium ion secondary battery are shown in FIG. 2 and FIG. 3. FIG. 2 is a schematic longitudinal sectional view showing an internal structure of the lithium ion secondary battery as an example. FIG. 3 is a schematic exploded view showing an electrode body of the lithium ion secondary battery illustrated in FIG. 2. FIG. 4 is a schematic sectional view taken along a thickness direction of a positive electrode of the lithium ion secondary battery illustrated in FIG. 2. It should be noted that the following description of the lithium ion secondary battery is provided for convenience of understanding and does not limit the method for reproducing the positive electrode material according to the present disclosure at all.

As shown in FIG. 2, a lithium ion secondary battery 100 is a sealed battery in which a battery case 30 accommodates a flat electrode body 20 and a non-aqueous electrolyte (not illustrated). As shown in FIG. 2, the battery case 30 is composed of an exterior body 32 accommodating the electrode body 20 and a lid 34 that closes an opening of the exterior body 32. The exterior body 32 and the lid 34 are sealed by welding such as laser welding. Examples of the material for the battery case 30 include aluminum, an aluminum alloy, and a resin.

In the example of the drawing, the battery case 30 is rectangular. However, the shape of the battery case 30 is not limited to this shape and may be, for example, cylindrical. Alternatively, the battery case 30 may be, for example, a laminate case having a gas barrier layer such as an aluminum layer and a sealant layer containing a thermoplastic resin.

The battery case 30 includes a positive electrode terminal 42 and a negative electrode terminal 44 for external connection. Also, the battery case 30 is provided with a safety valve 36 configured to release an internal pressure of the battery case 30 when the internal pressure rises to or above a predetermined level. The battery case 30 includes an injection port (not illustrated) for injecting a non-aqueous electrolyte. The positive electrode terminal 42 is electrically connected to a positive electrode current collector plate 42a. The negative electrode terminal 44 is electrically connected to a negative electrode current collector plate 44a.

As shown in FIG. 2 and FIG. 3, the electrode body 20 has a configuration in which an elongated positive electrode sheet 50 and an elongated negative electrode sheet 60 are laminated via two elongated separator sheets 70 and wound in the longitudinal direction. Thus, in this embodiment, the electrode body 20 is a wound electrode body. However, the electrode body 20 is not limited to this configuration and may also be a stacked-type electrode body with a plurality of positive electrodes and negative electrodes alternately laminated via separators.

As shown in FIG. 2 and FIG. 4, the positive electrode sheet 50 has a positive electrode active material layer 54 formed on one side or both sides (herein, both sides) of a positive electrode current collector 52 along the longitudinal direction. The positive electrode sheet 50 has a positive electrode active material layer non-formed portion 52a in which the positive electrode active material layer 54 is not formed and the positive electrode current collector 52 is exposed. The positive electrode current collector plate 42a is joined to the positive electrode active material layer non-formed portion 52a.

For example, the positive electrode current collector 52 constituting the positive electrode sheet 50 is made of aluminum foil or the like. The positive electrode active material layer 54 contains a positive electrode active material. The positive electrode active material is typically a lithium-transition metal composite oxide containing Ni and Co. Examples of the positive electrode active material include a lithium-nickel-cobalt-manganese composite oxide and a lithium-nickel-cobalt-aluminum composite oxide. The positive electrode active material layer 54 may contain a conductive material (e.g. carbon black, carbon nanotube), a binder (e.g. polyvinylidene fluoride), or the like.

The content of the positive electrode active material in the positive electrode active material layer 54 is desirably 70 mass% or more, more desirably 85 mass% or more and 99 mass% or less. The content of the conductive material in the positive electrode active material layer 54 is desirably 0.1 mass% or more and 20 mass% or less, more desirably 0.3 mass% or more and 15 mass% or less. The content of the binder in the positive electrode active material layer 54 is desirably 0.4 mass% or more and 15 mass% or less, more desirably 0.5 mass% or more and 10 mass% or less.

As shown in FIG. 3, the negative electrode sheet 60 has a negative electrode active material layer 64 formed on one side or both sides (herein, both sides) of a negative electrode current collector 62 along the longitudinal direction. The negative electrode sheet 60 has a negative electrode active material layer non-formed portion 62a in which the negative electrode active material layer 64 is not formed and the negative electrode current collector 62 is exposed. The negative electrode current collector plate 44a is joined to the negative electrode active material layer non-formed portion 62a.

The negative electrode current collector 62 constituting the negative electrode sheet 60 is made of, for example, copper foil. The negative electrode active material layer 64 contains a negative electrode active material. Examples of the negative electrode active material include carbon-based negative electrode active materials (e.g. graphite, hard carbon, soft carbon), and silicon-based negative electrode active materials (e.g. silicon, silicon oxide). The negative electrode active material layer 64 may contain a binder (e.g. styrene-butadiene rubber (SBR)), and a thickening agent (e.g. carboxymethyl cellulose (CMC)).

The content of the negative electrode active material in the negative electrode active material layer 64 is desirably 90 mass% or more, more desirably 95 mass% or more and 99 mass% or less. The content of the binder in the negative electrode active material layer 64 is desirably 0.1 mass% or more and 8 mass% or less, more desirably 0.5 mass% or more and 3 mass% or less. The content of the thickening agent in the negative electrode active material layer 64 is desirably 0.3 mass% or more and 3 mass% or less, more desirably 0.5 mass% or more and 2 mass% or less.

Examples of the separator 70 include a porous resin sheet made of polyethylene, polypropylene, or the like. The porous sheet may have a single-layer structure or a multilayer structure. A heat-resistant layer (HRL) may be provided on the surface of the separator 70.

Typically, the non-aqueous electrolyte contains a non-aqueous solvent and a supporting salt (in other words, an electrolyte salt). Examples of the non-aqueous solvent include carbonates (e.g. ethylene carbonate (EC), ethylmethyl carbonate, dimethyl carbonate), esters, and ethers. Examples of the supporting salt include lithium salts such as LiPF₆. The concentration of the supporting salt is not particularly limited, but is desirably 0.7 mol/L to 1.3 mol/L. The non-aqueous electrolyte may contain various additives such as gas generating agents and film forming agents. Although the non-aqueous electrolyte is used as the electrolyte in this embodiment, the electrolyte may be a solid electrolyte.

The lithium ion secondary battery 100 is used, for example, for automotive applications (i.e. power sources for driving vehicles such as battery electric vehicles (BEV), hybrid electric vehicles (HEV), and plug-in hybrid electric vehicles (PHEV)) and for power supply applications for electronic apparatuses or the like.

As described above, Li, Ni, and Co are typically used as constituent metal elements of the positive electrode active material in the positive electrode of the lithium ion secondary battery. The positive electrode active material may further contain Mn or Al. Generally, Al is used for the positive electrode current collector. Generally, Cu is used for the negative electrode current collector. Furthermore, in the lithium ion secondary battery, Li is used for the non-aqueous electrolyte. In addition, Al may be used for the battery case.

### <Leaching Step S100>

In leaching step S100, a battery waste containing Ni and Co is used. Ni and Co contained in the battery waste typically originate from the positive electrode active material (particularly, lithium transition metal composite oxide containing Ni and Co). However, Ni and Co contained in the battery waste do not necessarily originate from the positive electrode active material. It should be noted that in this specification, the "battery waste" includes not only used lithium ion secondary batteries but also components of a used lithium ion secondary battery, defective lithium ion secondary batteries, and components of a defective lithium ion secondary battery. The waste may undergo some processing (e.g. roasting).

Specific examples of the battery waste include a black mass of used lithium ion secondary batteries (especially black mass obtained by crushing and roasting used lithium ion secondary batteries), positive electrode waste taken from used lithium ion secondary batteries, electrode body waste taken from used lithium ion secondary batteries, positive electrode waste judged as a defective product, electrode body waste judged as a defective product, and a positive electrode active material judged as a defective product.

It is more desirable that the waste contains Ni and Co in a metal form. From this viewpoint, it is desirable that the waste has undergone reduction roasting. The waste is desirably a black mass obtained by crushing and reduction roasting of used lithium ion secondary batteries.

The above-described black mass can be obtained, specifically, for example, by a process in which lithium ion secondary batteries are crushed according to a known method, then, as necessary, sieved, and roasted at 400°C to 1500°C (desirably 700°C to 1000°C) under an atmosphere with an oxygen concentration of 5 vol% or less (desirably 1 vol% or less) (especially, under an atmosphere of an inert gas such as argon gas and nitrogen gas) for 1 to 24 hours (desirably 4 to 12 hours).

The battery waste may further contain elements other than Ni and Co (especially metal elements). For example, the battery waste may further contain Li, Mn, Al, and the like, in addition to Ni and Co. The battery waste may further contain transition metal elements other than Ni and Co.

In leaching step S100, an ammonia aqueous solution containing ammonia (NH₃) and ammonium sulfate ((NH₄)₂SO₄) is used as a leaching agent.

The ammonia concentration in the ammonia aqueous solution is not particularly limited, but the higher the concentration is, the higher the leachability is. Thus, the ammonia concentration in the ammonia aqueous solution is, for example, 1 mass% or more, desirably 5 mass% or more, more desirably 10 mass% or more, even more desirably 15 mass% or more. Furthermore, the upper limit of the ammonia concentration is a saturation concentration of ammonia in water, which is about 35 mass%. From the viewpoint of leachability and handleability, the ammonia concentration is particularly desirably 15 mass% to 25 mass%.

Typically, when a waste containing Ni and Co is subjected to leaching using an aqueous solution containing ammonia and ammonium sulfate, both Ni and Co tend to form an ammine complex and to be easily leached. Thus, the molar ratio of Ni to Co (i.e. Ni/Co ratio) in the leachate is the same or nearly the same as the Ni/Co ratio in the waste.

In contrast, in the method for reproducing the positive electrode material according to the present disclosure, oxygen is fed to the ammonia aqueous solution in the leaching. Thereby, oxygen is dissolved in the ammonia aqueous solution. When oxygen is dissolved in the aqueous solution, a part of Co that has been once leached into the ammonia aqueous solution precipitates as a Co compound due to ammonium sulfate. Accordingly, the amount of Co dissolved in the ammonia aqueous solution decreases, and the Ni/Co ratio in the leachate becomes greater than the Ni/Co ratio in the waste. Herein, the amount of precipitated Co depends on the amount of ammonium sulfate in the ammonia aqueous solution. Thus, the method for reproducing the positive electrode material according to the present disclosure makes it possible to adjust the Ni/Co ratio by feeding oxygen to the ammonia aqueous solution with control of the amount of ammonium sulfate.

Accordingly, in the method for reproducing the positive electrode material according to the present disclosure, the amount of ammonium sulfate can be determined as appropriate depending on the ratio of Ni and Co to be leached into the aqueous solution (i.e. desired Ni/Co ratio). The more the ammonium sulfate amount is, the more the precipitated Co amount is, and therefore the Co content is decreased and the Ni/Co ratio is increased in the leaching.

From the viewpoint of precipitating Co that has been once leached, the amount of ammonium sulfate is desirably at least 5 molar times, more desirably at least 7 molar times the amount of Co in the battery waste. The amount of ammonium sulfate may be at most 100 molar times, at most 50 molar times, or at most 40 molar times the amount of Co in the battery waste. The concentration of ammonium sulfate in the ammonia aqueous solution is desirably 1.2 mol/L or more, more desirably 1.4 mol/L or more. The concentration of ammonium sulfate in the ammonia aqueous solution may be 3.0 mol/L or less, or 2.5 mol/L or less.

The ammonia aqueous solution may contain only water, ammonia, and ammonium sulfate. The ammonia aqueous solution may further contain components other than water, ammonia, and ammonium sulfate in an amount within such a range that the effects of the present disclosure are not inhibited (e.g. at a concentration of less than 10 mass%, 5 mass% or less, or 1 mass% or less).

The amount of the ammonia aqueous solution is desirably an amount sufficient to completely immerse the battery waste.

In leaching step S100, oxygen is fed to the ammonia aqueous solution in the leaching. Oxygen can be fed by introducing an oxygen-containing gas (e.g. oxygen gas, air) into the ammonia aqueous solution by bubbling or the like. In this case, smaller bubbles allow for more efficient increase in the dissolved oxygen content. Alternatively, for example, oxygen can be fed by a process in which a container is sealed and oxygen is introduced into the container while pressurized.

For example, leaching step S100 can be performed as follows. First, a container is prepared. The container may be a known container conventionally used for ammonia leaching. As necessary, the container may be equipped with heating means such as a heater, temperature measurement means such as a thermometer and a temperature sensor, and stirring means such as a stirring blade and a magnetic stir bar. A bubbling device is also prepared. The bubbling device may be a known device that is used in leaching. The bubbling device may be attached to the container before or after introduction of the battery waste and the ammonia leaching solution.

The battery waste and the ammonia aqueous solution are introduced into the container. The order of introduction is not particularly limited, and any one of them may be first introduced, or both of them may be simultaneously introduced. On the other hand, an oxygen-containing gas is fed to the ammonia aqueous solution by the bubbling device. Herein, it is desirable to feed the oxygen gas to the ammonia aqueous solution by bubbling.

The amount of oxygen to be fed is desirably at least equimolar to oxidizable elements (especially, Ni and Co) contained in the battery waste, more desirably at least 2 molar times, even more desirably at least 3 molar times the oxidizable elements. The amount of oxygen to be fed may be at most 100 molar times the oxidizable elements contained in the battery waste.

Leaching step S100 may be performed at room temperature (i.e. 25±10°C) or under heating. The leaching temperature is desirably 15°C or higher, more desirably 20°C or higher. On the other hand, the leaching temperature may be 90°C or lower, 85°C or lower, or 80°C or lower.

The leaching time can be determined as appropriate depending on the leaching temperature. The higher the leaching temperature is, the shorter the leaching time may be. It should be noted that the leaching speed of Ni and Co is enhanced by dissolving oxygen in the ammonia aqueous solution. This may be because oxidation of Ni and Co affects the leaching speed. The leaching time is, for example, 1 hour or longer, desirably 2 hours or longer, more desirably 4 hours or longer. On the other hand, from the viewpoint of operation efficiency, the leaching time is, for example, 48 hours or shorter, desirably 24 hours or shorter, more desirably 10 hours or shorter.

It is desirable to perform stirring during the leaching. The stirring speed is not particularly limited, but is desirably 200 rpm or higher, more desirably 400 rpm or higher, even more desirably 500 rpm or higher. The stirring speed may be 2000 rpm or lower, 1000 rpm or lower, or 800 rpm or lower.

As described above, Ni and Co can be leached into the aqueous phase (i.e. the ammonia aqueous solution) by the ammonia leaching. That is, leaching step S100 can be performed. The ammonia leaching can be terminated by solid-liquid separation such as filtrattion. By the solid-liquid separation, a leachate (i.e. aqueous phase into which Ni and Co have leached) and a solid residue can be obtained.

It should be noted that the solid residue contains a precipitated Co compound. This Co compound is a water-soluble salt, and considered as cobalt sulfate because Co and S elements have been detected from the Co compound in an analysis using a scanning electron microscopy-energy dispersive X-ray spectroscopy (SEM-EDX). The precipitated Co compound can be separated and recovered from the solid residue by dissolving the Co compound in water.

Accordingly, the method for reproducing the positive electrode material according to the present disclosure may further include Co separation step S30, as shown in FIG. 1.

### <Co Separation Step S30>

In Co separation step S30, the Co compound precipitated in leaching step S100 is separated from the solid residue by dissolving the Co compound in water. This Co separation step S30 may be performed according to a known method. Specifically, for example, Co separation step S30 may be performed by immersing the solid residue in water. Alternatively, Co separation step S30 may be performed by washing the solid residue with water. Co can be recovered from water in which the Co compound is dissolved according to a known method.

When the electrode waste contains Mn and Al, Mn and Al remain in the solid residue obtained in leaching step S100. Also, in Co separation step S30, Mn and Al remain in the solid residue. Thus, in this case, Mn and Al can be separated from Co in Co separation step S30.

As described above, in the method for reproducing the positive electrode material according to the present disclosure, in which oxygen is fed in the leaching, the Ni/Co ratio in the leachate can be adjusted by controlling the concentration of ammonium sulfate. Particularly, the Ni/Co ratio in the leachate can be adjusted so as to be increased.

Thus, the method for reproducing the positive electrode material according to the present disclosure may further include Ni/Co ratio confirmation step S10 and ammonium sulfate amount selection step S20 before leaching step S100, as shown in FIG. 1.

### <Ni/Co Ratio Confirmation Step S10>

In Ni/Co ratio confirmation step S10, the Ni/Co ratio of the battery waste is confirmed. If the materials used in the battery waste are known, the Ni/Co ratio can be confirmed according to the materials. For example, if the composition of the positive electrode active material is known and Ni and Co are not used except for the positive electrode active material, the Ni/Co ratio in the positive electrode active material can be considered as the Ni/Co ratio in the battery waste.

If the materials used for the battery waste are unknown, the Ni/Co ratio in the battery waste can be determined according to a known method. Specifically, for example, each amount of Ni and Co in the waste can be measured using a high-frequency inductively coupled plasma (ICP) emission spectroscopy according to a known method. From the determined Ni and Co amounts, the Ni/Co ratio can be calculated.

### <Ammonium Sulfate Amount Selection Step S20>

In ammonium sulfate amount selection step S20, an amount of ammonium sulfate is selected depending on a desired molar ratio of Ni to Co. Specifically, the amount of ammonium sulfate is selected depending on the Ni/Co ratio determined in Ni/Co ratio confirmation step S10, such that the amounts of Ni and Co in the leachate satisfy the desired Ni/Co ratio. This desired Ni/Co ratio is typically the Ni/Co ratio in reusing Ni and Co.

For this selection, it is advantageous to adopt a process in which a part of the battery waste is collected as a sample, and subjected to a preliminary experiment for understanding the relationship between the amount of ammonium sulfate and the ratio of Ni and Co leached into the ammonia aqueous solution, to create a calibration curve of the ammonium sulfate amount versus the ratio of Ni and Co leached into the ammonia aqueous solution. Thus, in ammonium sulfate amount selection step S20, the amount of ammonium sulfate can be selected based on this calibration curve.

Alternatively, for this selection, it is advantageous to subject battery wastes having various Ni/Co ratios to a preliminary experiment, and to previously create a database about the Ni/Co ratio in the battery waste, and the relationship between the amount of ammonium sulfate and the ratio of Ni and Co leached into the aqueous solution. In ammonium sulfate amount selection step S20, the ammonium sulfate amount can be selected based on this database.

For the selection of the ammonium sulfate amount, a program utilizing a calibration curve or a database may be created and used.

By performing the leaching step S100 based on this selected ammonium sulfate amount, a leachate containing Ni and Co in a desired Ni/Co ratio can be obtained. According to a known method, Ni and Co can be separated from the leachate at a desired Ni/Co ratio. Alternatively, the leachate containing Ni and Co at a desired Ni/Co ratio may be directly used for producing the positive electrode active material.

According to the method for reproducing the positive electrode material according to the present disclosure, Ni and Co can be recovered from the battery waste containing Ni and Co while adjusting the Ni/Co ratio. Particularly, Ni and Co can be recovered while adjusting the Ni/Co ratio so as to be high. The method for reproducing the positive electrode material according to the present disclosure can be easily performed. Furthermore, in the method for reproducing the positive electrode material according to the present disclosure, the leaching speeds of Ni and Co are also enhanced. Thus, even if the Ni/Co ratio in the battery waste differs from the Ni/Co ratio of the positive electrode active material to be reproduced, the Ni and Co recovered from the battery waste can be used to efficiently produce the positive electrode active material. Consequently, the method for reproducing the positive electrode material according to the present disclosure is extremely useful in the material recycling of lithium ion secondary batteries.

Examples of the present disclosure will be explained below in detail, however, the present disclosure is not intended to be limited to those described in Examples.

### [Comparative Examples 1 to 5]

First, a roasted black mass as a leaching sample was prepared according to the following procedure. A positive electrode having a positive electrode active material layer containing a lithium-nickel-cobalt-manganese composite oxide (LiNi_{0.6}Co_{0.2}Mn_{0.2}O₂) and supported on an aluminum (Al) foil was crushed. The crushed positive electrode was sieved through a 500 µm mesh sieve to prepare a positive electrode powder. Furthermore, a negative electrode having a negative electrode active material layer containing graphite and supported on a copper foil was crushed. The crushed negative electrode was sieved through a 500 µm mesh sieve to prepare a negative electrode powder. The obtained positive electrode powder and negative electrode powder were mixed to obtain a black mass. The black mass was roasted under a low oxygen atmosphere at 750°C for 6 hours to obtain a roasted black mass with most of metals reduced. Into an acid, 1 g of the roasted black mass was dissolved, and subjected to a high-frequency inductively coupled plasma (ICP) emission spectroscopy. From the analysis results, the amounts of Ni and Co in the roasted black mass were determined.

Subsequently, 28 mass% ammonia water was mixed with ammonium sulfate ((NH₄)₂SO₄) as a pH adjuster to prepare an ammonia aqueous solution. Here, the concentration of ammonium sulfate was set to a concentration shown in Table 1.

Herein, the Ni concentration and Co concentration in the ammonia aqueous solution when Ni and Co in the roasted black mass were completely dissolved in the ammonia aqueous solution were defined as theoretical maximum concentrations. The roasted black mass was weighed out in an amount corresponding to the theoretical maximum concentration shown in Table 1. The roasted black mass weighed out was added to the ammonia aqueous solution. The ammonia aqueous solution was stirred at 500 rpm for 6 hours while maintaining the temperature at 25°C to perform ammonia leaching. Then, solid-liquid separation was performed by filtration to obtain a leachate and a solid residue.

### [Examples 1 to 4]

The ammonia leaching was performed as described above, except that oxygen was fed to the ammonia aqueous solution by bubbling at a feeding rate of 0.4 mol/min immediately after the roasted black mass weighed out was added to the ammonia aqueous solution.

### [Leaching Ratio Evaluation]

The leachate obtained in each of Examples and Comparative Examples was subjected to an ICP emission spectroscopy, and based on the analysis results, the concentrations of Ni and Co were determined. Based on the Ni and Co concentrations, the molar ratio of Ni to Co in the leachate was calculated.

### [Table 1]

**Table 1**

| | Oxygen bubbling | Theoretical maximum concentration (mol/L) | | Ni/Co ratio in black mass | Ammonium sulfate concentration (mol/L) | Ammonium sulfate/Co ratio | Concentration in leachate (mol/L) | | Ni/Co ratio in Icachate |
|---|---|---|---|---|---|---|---|---|---|
| | | Ni | Co | | | | Ni | Co | |
| Comparative Example 1 | None | 0.20 | 0.07 | 3.0 | 1.5 | 21.4 | 0.18 | 0.06 | 3.0 |
| Comparative Example 2 | None | 0.20 | 0.07 | 3.0 | 2.5 | 35.7 | 0.20 | 0.07 | 3.0 |
| Comparative Example 3 | None | 0.20 | 0.07 | 3.0 | 2.0 | 28.6 | 0.20 | 0.07 | 3.0 |
| Comparative Example 4 | None | 0.24 | 0.08 | 3.0 | 2.0 | 25.0 | 0.22 | 0.07 | 3.1 |
| Comparative Example 5 | None | 0.60 | 0.20 | 3.0 | 2.0 | 10.0 | 0.30 | 0.12 | 2.5 |
| Example 1 | Performed | 0.24 | 0.08 | 3.0 | 2.0 | 25.0 | 0.24 | 0.05 | 4.8 |
| Example 2 | Performed | 0.60 | 0.20 | 3.0 | 1.5 | 7.5 | 0.60 | 0.16 | 3.8 |
| Example 3 | Performed | 0.60 | 0.20 | 3.0 | 2.0 | 10.0 | 0.60 | 0.10 | 6.0 |
| Example 4 | Performed | 0.60 | 0.20 | 3.0 | 2.5 | 12.5 | 0.60 | 0.08 | 7.5 |

In Comparative Examples 1 to 4 without oxygen bubbling during the leaching, the Ni/Co ratio in the roasted black mass was nearly identical to the Ni/Co ratio in the leachate. In Comparative Example 5 without oxygen bubbling during the leaching, the amount of the roasted black mass was increased, but the Ni/Co ratio was slightly decreased. This may be because the leaching time was insufficient.

On the other hand, in Examples 1 to 4 with oxygen bubbling during the leaching, the Ni/Co ratio in the leachate increased as the amount of ammonium sulfate increased. From this, it can be understood that according to the method for reproducing the positive electrode material according to the present disclosure, Ni and Co can be recovered from the battery waste containing Ni and Co while adjusting the Ni/Co ratio to be increased. Furthermore, from the comparison of Comparative Example 5 with Examples 2 to 4, it can be understood that the oxygen bubbling improves the leaching speed of Ni and Co.

The specific examples of the present disclosure have been described above in detail, but these are examples and will not limit the scope of claims. The techniques described in the scope of claims include those in which the specific examples exemplified above are variously modified and changed.

In other words, the method for reproducing the positive electrode material according to the present disclosure includes the following items [1] to [7].
[1] A method for reproducing a positive electrode material, including: a step of leaching Ni and Co, using an ammonia aqueous solution containing ammonia and ammonium sulfate, from a battery waste containing Ni and Co into the ammonia aqueous solution, in which oxygen is fed to the ammonia aqueous solution in the leaching.
[2] The method according to item [1], in which an amount of the ammonium sulfate is at least 5 molar times an amount of Co in the battery waste.
[3] The method according to item [1] or [2], in which in the ammonia aqueous solution, a concentration of the ammonia is 15 mass% or more, and a concentration of the ammonium sulfate is 1.2 mol/L or more.
[4] The method according to any one of items [1] to [3], in which oxygen gas is fed to the ammonia aqueous solution by bubbling in the leaching.
[5] The method according to any one of items [1] to [4], in which the battery waste contains Ni and Co in a metal form.
[6] The method according to any one of items [1] to [5], further including, before the leaching step, a step of confirming a molar ratio of Ni to Co in the battery waste, and a step of selecting the amount of ammonium sulfate depending on a desired molar ratio of Ni to Co.
[7] The method according to any one of items [1] to [6], in which in the leaching step, a Co compound precipitates, and the method further includes a step of dissolving, in water, the Co compound precipitated to separate the Co compound from a solid residue.

## Claims

1. A method for reproducing a positive electrode material, comprising: a step (S100) of leaching Ni and Co, using an ammonia aqueous solution containing ammonia and ammonium sulfate, from a battery waste containing Ni and Co into the ammonia aqueous solution, wherein
oxygen is fed to the ammonia aqueous solution in the leaching.

2. The method according to claim 1, wherein an amount of the ammonium sulfate is at least 5 molar times an amount of Co in the battery waste.

3. The method according to claim 1, wherein in the ammonia aqueous solution, a concentration of the ammonia is 15 mass% or more, and a concentration of the ammonium sulfate is 1.2 mol/L or more.

4. The method according to claim 1, wherein oxygen gas is fed to the ammonia aqueous solution by bubbling in the leaching.

5. The method according to claim 1, wherein the battery waste contains Ni and Co in a metal form.

6. The method according to claim 1, further comprising, before the leaching step (S100), a step (S10) of confirming a molar ratio of Ni to Co in the battery waste, and a step (S20) of selecting the amount of ammonium sulfate depending on a desired molar ratio of Ni to Co.

7. The method according to claim 1, wherein in the leaching step (S 100), a Co compound precipitates, and the method further includes a step (S30) of dissolving, in water, the Co compound precipitated to separate the Co compound from a solid residue.
